# EUROPEAN PATENT SPECIFICATION

(11) **EP 3 289 258 B1**
(45) Date of publication and mention of the grant of the patent: **10.06.2020**
(21) Application number: 16725578.5
(22) Date of filing: 20.04.2016
(51) Int. Cl.: F16K 17/16

(54) **A SAFETY OR RUPTURE ELEMENT FOR A PIPELINE AND METHOD FOR MAKING SAID ELEMENT**
SICHERHEITS- ODER BRUCHELEMENT FÜR EINE ROHRLEITUNG UND VERFAHREN ZUR HERSTELLUNG DES BESAGTEN ELEMENTS
ÉLÉMENT DE SÉCURITÉ OU DE RUPTURE DESTINÉ À UNE CONDUITE ET PROCÉDÉ DE FABRICATION DUDIT ÉLÉMENT

(30) Priority: 28.04.2015 IT MI20150598
(43) Date of publication of application: 07.03.2018
(73) Proprietor: Donadon Safety Discs and Devices S.R.L., 20011 Corbetta (MI) (IT)
(72) Inventor: BOSISIO, Lauro, 20162 Milano (IT); DONADON, Antonio, 20019 Settimo Milanese (Milano) (IT); MODENA, Mario, 23828 Perledo (Lecco) (IT)
(74) Representative: Zermani, Umberto
(86) International application number: PCT/IB2016/052234
(87) International publication number: WO 2016/174548

(56) References cited:
- WO-A1-2008/155783
- US-A1- 2005 161 082
- US-A1- 2014 238 984

## Description

The object of the present invention is a safety or rupture element, preferably a disc, having at least one petal and configured to facilitate the opening of this at least one petal for the purposes of discharging the fluid, so as to increase the passage or discharge section defined by the disc in a discharge configuration and, in any case, prevent detachment of this at least one petal.

In particular, the present invention is advantageously used in the production of safety devices applied to plant systems along pneumatic or hydraulic lines, to ensure the necessary safety measures of the system, which can undergo conditions differing from those for which it was designed.

More specifically, these devices are applied to emergency lines in order to completely close the conduit on which they are applied and they comprise at least one rupture disc.

A high-pressure fluid acts within one of the half-spaces defined by the device, whereas a lower pressure, for example atmospheric pressure, acts on the opposite half-space.

Alternatively, these safety devices can protect plant systems that operate at sub-atmospheric pressure. In this case as well, the device is subjected to a difference in pressure that acts between the two half-spaces defined by the device.

For example, when the difference between the pressure acting within the plant system and the external pressure exceeds a pre-calculated safety threshold value, the rupture disc splits open, so as to enable the pressurized fluid to exit the system passing through the rupture disc that is in the discharge configuration. In this manner, possible undesired excess pressure cannot damage other parts of the plant system.

To perform this discharge function, the safety discs comprise a rupture portion on which the fluid exerts its pressure, which must remain within a certain limit in order to avoid damaging the system. In particular, the rupture portion can be flat, concave or convex.

These discs are usually circular in shape, but alternatively they can also be of a different shape, for example square-shaped or rectangular, depending upon the conduit or pipeline on which they need to be applied. Discs that do not have any pre-established frangible lines open in an undefined manner with possible separation of some parts.

For this reason, in many cases, preferably discs with pre-established frangible lines are used. The frangible lines typically define one or more petals that are suitable for opening so as to define a passage or discharge section of the fluid contained in the pipeline.

The set of petals virtually defines the rupture portion, which is part of the rupture disc itself.

The frangible lines are obtained by means of cuts, which can be through or non-through cuts through the thickness of the disc.

In the case of through cuts, a second continuous layer that ensures pneumatic and/or hydraulic sealing is needed. This is not necessary in the case of non-through cuts.

In other words, the cuts can be defined by a plurality of non-through cuts, arranged on a surface of the rupture disc according to a suitable configuration, in such a manner as to define corresponding pre-established frangible lines.

In the methods that comprise non-through incisions or cuts, execution of the cuts requires particular attention in terms of depth, length and width, and also concerning maintenance of the mechanical characteristics of the rupture disc material near the cuts. In particular, the crystalline-metallurgical structure of the material needs to remain unaltered.

In fact, the dimensions of the cuts are selected as a function of the pre-established pressure threshold value at which the disc must break. Undesirable mechanical alterations and/or alterations of the crystalline structure, which are also difficult to evaluate, can modify the rupture threshold value of the rupture disc. In this case, the rupture disc begins to operate before or after this value is reached.

The methods with the highest performances for realizing non-through incisions or cuts on rupture discs, without jeopardizing the crystalline structure thereof, comprise the use of high-frequency lasers and they have been developed by the Applicant in recent years.

Examples of these methods and the devices capable of implementing such methods are known from the international patents WO2008/155783 and WO2013/014614 also filed by Donadon SDD S.r.l..

In particular, the incisions are generally defined by radial notches passing through the centre of the rupture portion. The notches are suitable for defining preferably a plurality of rupture petals or rupture sections of the disc.

When the threshold value of the pressure exerted by the fluid is exceeded, the safety or rupture disc splits open at the pre-established frangible lines and the petals detach from each other, turning in the direction of the "relief" or "discharge" of the fluid. The splitting open of the rupture portion acts in such a manner that the rupture disc changes from a closed configuration to a discharge configuration.

Note that for the purposes of structural symmetry, the distribution of stresses and production simplicity, the rupture portion generally has a preferential outline that is at least partially curved and preferably circular. In this manner, the rupture portion usually defines a central axis.

Each one of the petals, which belong to the rupture portion, thus comprises a base usually located in proximity to a sector or arc of the circle defined by the outline of the rupture portion. Each one of the petals also usually has a vertex virtually in common with the other petals and that is aligned with the centre of this circle.

When the rupture portion splits open and the petals separate from each other, the discharge section that is defined is smaller than the pipeline section at which the rupture disc is located.

In particular, the extension of the discharge section can prove to be too limited, in relation to the extension of the pipeline, because of the structural resistance offered by the portion or area of the petal located in the outermost position with respect to the central axis. This outermost area, which is the area adjacent to the peripheral portion of the rupture disc, exerts an action inside the petal that opposes the bending of the petal. This phenomenon is also related to the fact that when the rupture portion is in the closed configuration, the petal has a concavity opposite the one according to which the same petal tends to be arranged upon completion of the splitting open of this rupture portion.

For discs used as "reverse-acting" discs as well, in which, when the disc is in the closed configuration, the convexity of the rupture portion faces the fluid, a step usually takes place in any case during which the petal passes from a concavity to the opposite concavity step usually takes place in any case during which the petal passes from one concavity to the opposite concavity. In fact, before rupturing, the reverse-acting disc also acts as if it were a conventional or direct type of disc.

The aim of the present invention is to develop a safety element for a pipeline, preferably a rupture disc, which has a better tendency to open, so as to define an ampler discharge section for the fluid, in relation to that of the pipeline, with respect to currently known rupture discs.

Moreover, excessive opening of the petals, and thus their excessive bending outwards with respect to the central axis of the rupture portion, can cause breakage of or, in any case, damage to the petal.

Another aim of the present invention is to develop a safety element for a pipeline, preferably a rupture disc, which has a better tendency to open, so as to define an ampler discharge section for the fluid, in relation to that of the pipeline, with respect to currently known rupture discs, in compliance with requirements in terms of resistance to petal detachment and reduction of the risk of damage to the petals.

These aims are achieved by means of a safety element according to claim 1.

A possible embodiment of the present invention can exhibit at least one of the following technical aspects.

Preferably, said at least one petal is delimited laterally by at least two frangible lines, each of which extends from a point of intersection to a respective end portion, in a closed configuration of said safety element. The closed configuration of the safety element is such that the safety element is suitable for occluding the pipeline.

Preferably, said at least one reversal axis joins the at least two respective end portions of said at least two frangible lines. Preferably, said at least two end portions comprise the respective end points of these at least two frangible lines.

Preferably, said at least one reversal axis corresponds at least in part to a base of said at least one petal, said base joining said at least two respective end portions of said at least two frangible lines.

Preferably, said base joins the respective end points of said at least two frangible lines.

In the case in which the outline of the rupture portion is a circle, the base of the petal, once it has been projected for example on a orthogonal plane to a central axis defined by the rupture portion, substantially coincides with a chord of this circle. The base of the petal is thus virtually defined once the petal has opened and separated from the remaining part of the safety element, and possibly from the adjacent petals.

Preferably, said at least one weakening line extends astride said at least one reversal axis.

Preferably, the rupture portion is separated from a peripheral portion of said safety element by an outline.

Preferably, said at least one weakening intersects said outline.

Preferably, said at least one weakening line extends astride said outline. Preferably, said at least one petal has a number of weakening lines distributed along said at least one reversal axis.

Preferably, each petal comprises a plurality of weakening lines arranged astride said reversal axis and that are equidistant from each other.

The presence of a number of distinct weakening lines increases the effect of increased flexibility of the petal.

Preferably, the rupture portion defines a central axis suitable for being arranged parallel to the pipeline and said at least one weakening line is at least partially oriented radially with respect to the central axis of the rupture portion, in a closed configuration of said safety element.

Therefore, the orientation of the weakening lines is substantially radial.

It should be kept in mind that the central axis is preferably oriented parallel to the direction according to which the rupture portion tends to discharge the fluid initially contained in the pipeline. The radial arrangement of the weakening lines is suited to facilitating a type of movement of the petal suitable for generating a flow that is substantially parallel to this central axis.

Preferably, the petals are angularly distributed so that the respective reversal axes define a polygon inscribed in circle.

The safety element preferably comprises a plurality of weakening lines associated with each petal and that are equispaced angularly with respect to each other.

Preferably, in a closed configuration of said safety element, said rupture portion is concave.

Preferably, in a closed configuration of said safety element, said rupture portion is dome-shaped.

Preferably, said at least one weakening line is shallower in depth than said one or more frangible lines.

In this manner, when the rupture portion splits open, the weakening lines work jointly so as to increase the flexibility of the petal and/or the deformation thereof as it opens, and they do not break because they are suitable for resisting a greater load with respect to the frangible lines. Preferably, said one or more frangible lines and said at least one weakening line are realized by means of laser cutting (particularly laser ablation).

In particular, preferably a high-frequency laser beam is used to eliminate imperfections in the crystalline structure of the material of the safety element.

According to another aspect, the present invention concerns a method for making a safety element, preferably a rupture disc, having one or more of the preceding characteristics, and comprising the steps of realizing said one or more frangible lines and said at least one weakening line by means of cuts and/or incisions made with a laser.

The laser used is preferably a high-frequency laser beam.

The characteristics of the present invention shall be clarified in the following detailed description concerning a possible embodiment of the present invention, provided by way of non-limiting example of the more general concepts claimed.

The following detailed description refers to the attached figures, of which:
Figure 1 is a top view of a possible embodiment of the present invention in a closed configuration;

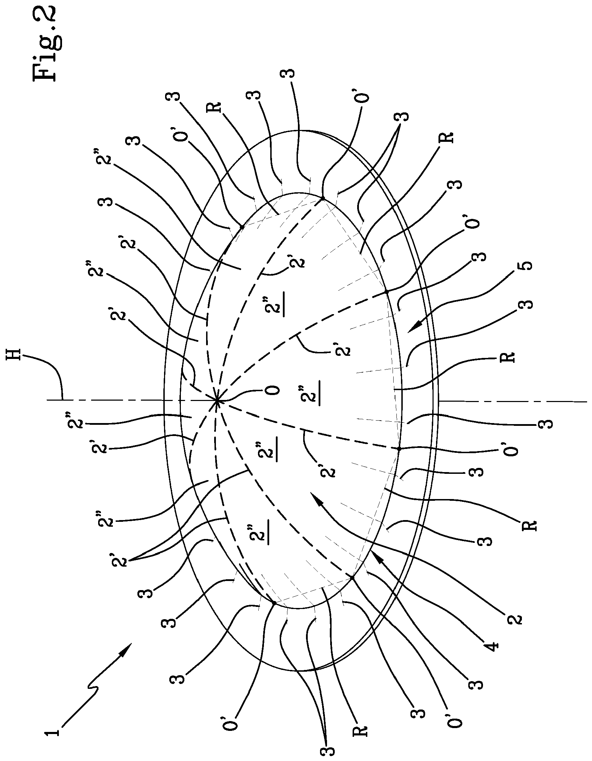

Figure 2 is a perspective view of this embodiment in a closed configuration.

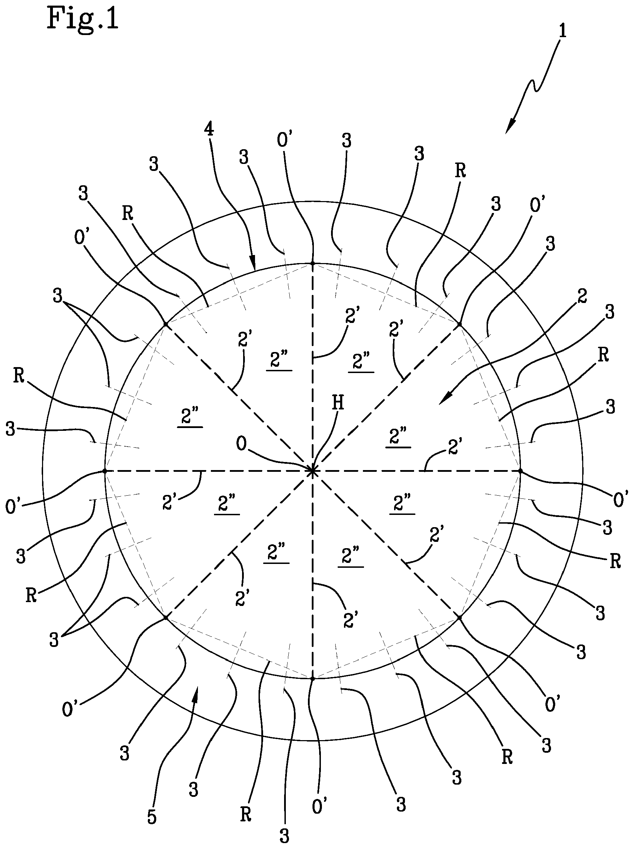

A safety element 1 according to the present invention is shown in Figure 1. More specifically, the attached figures refer to a safety element in the form of a rupture disc 1. Therefore, without loss of generality, explicit reference shall be made herein below to a rupture disc 1, in place of a generic safety element, and the characteristics specific to one can be combined, mutatis mutandis, with those of the other.

The rupture disc 1 is shaped so as to be arranged along a pipeline, preferably transversely thereto, and thus transversely to the axis of extension of the pipeline. The attached figures refer to a closed configuration of the rupture disc 1.

It can be noted that the rupture disc 1 comprises a rupture portion 2 in which one or more frangible lines 2'are defined and in turn define at least one rupture petal 2".

In the embodiment shown, there are a number of frangible lines 2' that define a plurality of rupture petals 2".At least one petal 2" of this plurality is laterally limited by at least two frangible lines 2".Advantageously, the rupture portion 2 is at least partially concave and preferentially dome-shaped. The rupture disc 1 can be fixed to the pipeline so that the fluid acts upon the convex part of the rupture portion 2, but it could also be arranged in an opposite manner.

In the attached figures, the rupture portion 2 is in a closed configuration 2, and in fact it is dimensioned so as to occlude the pipeline until a certain pressure level, and thus a certain drop in pressure, is reached on the rupture portion 2.

Each one of said at least two frangible lines 2' extends from a common point of intersection O to an end portion. The end portion of each one of said at least two frangible lines 2' comprises an end point O' of the single frangible line 2' and the end point O' is opposite this common point of intersection O.

The end point O' of each one of said at least two frangible lines 2' is located on an outline 4 that separates a rupture portion 2 of the rupture disc 1 from a peripheral portion 5 of the same rupture disc 1. The peripheral portion 5 virtually remains solidly constrained to the pipeline and preferably intact when the rupture portion 2 is splitting open. Said one or more frangible lines 2' are dimensioned so as to split open, so that the disc 1 changes from a closed configuration, as shown in the attached figures, to a discharge configuration, which is not shown. Each one of said petals 2" is thus suitable for opening, following rupture or splitting open of the frangible lines 2', by turning at least about one reversal axis R.

It can be stated that this reversal axis R generally indicates the manner of rotation of the petal 2' and therefore this reversal axis R could also move when the petal 2"is opening. In fact, considering the components of deformation of the opening movement of the individual petal 2", one could state that the opening movement of said at least one petal 2' could also define a number of variable reversal axes R.

Said at least one reversal axis R could therefore also follow the petal 2" during its deformation.

In the embodiment shown in the attached figures, the reversal axis R of said at least one petal 2" joins two respective end portions of the at least two frangible lines 2' that laterally delimit said at least one petal 2".

In particular, in the embodiment shown, the reversal axis R advantageously joins the two end points O' of these at least two frangible lines 2'.This configuration optimizes the width of the discharge section that is created when the individual petal 2" opens and separates at least partially from the remaining part of the rupture disc 1.

Therefore, said at least one reversal axis R corresponds, at least partly, to a base of the respective petal 2".

In the embodiment shown, the rupture portion 2 defines a central axis H, the intersection of which with the rupture portion 2 defines the point of intersection O between the petals 2"and therefore between the frangible lines 2' that laterally delimit these petals 2".In Figure 1, the central axis H is visible only as a point coincident with this point of intersection O.

The rupture disc 1 is suitable for being arranged in a pipeline so that this central axis H is aligned and/or parallel and/or coincident with an axis of extension of the pipeline, or in any case, so that it is arranged along this pipeline.

In the embodiment shown, the petals 2"converge towards the central axis H and are arranged about this central axis H. These petals are also adjacent to each other. In this manner, the opening of the rupture portion 2 virtually takes place starting from the centre O common to the petals 2", and the petals separate from each other along the frangible lines 2'.

At least one of the petals 2" has at least one weakening line 3.This at least one weakening line 3 is oriented at least partially transversely to the reversal axis R of the petal 2".

This weakening line 3 also lies in proximity to this at least one reversal axis R, so as to efficiently facilitate the bending open of the individual petal 2".

Preferentially, this at least one weakening line 3 intersects the reversal axis R, and thus extends as far as this reversal axis R. In particular, in the embodiment shown, this at least one weakening line is arranged astride this reversal axis R.

This positioning of the weakening line 3 further increases the flexibility of the petal 2" in rotating about the reversal axis R and decreases discontinuities in the internal stresses generated in the petal 2" following deformation thereof.

This at least one weakening line 3 can also intersect the outline 4, and therefore it can extend as far as this outline 4.In particular, in the embodiment shown, this at least one weakening line 3 is arranged astride this outline 4.

The presence of at least part of the weakening line 3 also on the peripheral portion 5, which remains substantially solidly constrained to the pipeline during the splitting open of the rupture portion 2, acts in such a manner as to increase structural continuity between the part of the petal 2" adjacent to the peripheral portion 5, and the peripheral portion 5 itself.

In the embodiment shown, at least one of the petals 2", and preferably each petal 2", exhibits a number of weakening lines 3 distributed along the reversal axis R of the respective petal 2".Moreover, at least one weakening line 3 is oriented radially with respect to the central axis H, for the purpose of acting in such a manner that the weakening line 3 can facilitate rotational movement of the petal 2" suitable for obtaining a discharge flow of the fluid more or less in a direction parallel to the central axis H.

The weakening lines 3 are shallower in depth than the frangible lines 2'.In fact, unlike the frangible lines 2', these weakening lines 3 should not break during the opening of the rupture portion 2.

The frangible lines 2' and the weakening lines 3 are preferably realized by means of laser cutting.

In accordance with a second aspect of the present invention, the invention concerns a method for making a rupture disc 2 having one or more of the characteristics disclosed hereinabove, and that comprises a step for realizing the frangible lines 2' and a step for realizing the weakening lines 3. Preferentially, these steps are carried out by making cuts in the rupture disc 1 by means of laser cutting.

Preferably, the cutting step preliminarily comprises selecting a pulsed laser beam "L" with a wavelength range of 300 nanometres to 1800 nanometres, in which the duration of each laser pulse is less than 10 nanoseconds, and preferably less than 1 nanosecond.

Preferably, in the preferred embodiments, the wavelength of the laser beam L is equal to approximately 343, 515, or 1030 nanometres, and in any case preferably less than 1552 nanometres.

Preferably, the duration of each laser pulse ranges between 10 femtoseconds (10*10-15 seconds) and 50 picoseconds; more preferably, this duration ranges between 300 femtoseconds and 10 picoseconds. Laboratory testing using a pulse duration of 800 femtoseconds has shown good results (as shall be described below). In these tests, the wavelength of the laser beam "L" was equal to 1552 nanometres.

Moreover, the cutting step comprises selecting a laser pulse repetition rate (that is to say, the frequency with which each pulse is repeated) ranging between 15 KHz and 1.5 MHz. Preferably, the pulse repetition rate ranges between 150 KHz and 1 MHz.

In a preferred embodiment, the laser pulse repetition rate ranges between 200 and 600 MHz.

The method further comprises the step of selecting a speed of relative motion between the laser beam "L" and the slab-like body, that is to say, the speed at which the laser beam moves along the slab-like body.

The method further comprises the step of selecting an energy value for each pulse of the laser beam "L".

Preferably, the energy value of each pulse of the laser beam "L" ranges between 1 microjoule and 250 microjoules, more preferably less than 200 microjoules.

The power of the laser beam "L" is comprised between 1 and 80 W, preferably between 1 and 10 W.

The depth of the cut 6 per single pass of the laser is also a function of the selection of the ranges and values cited above. According to the parameters cited hereinabove, the score depth of each single pass of the laser ranges between 0.005 µm and 5 µm.

The invention achieves the proposed aims, in that it makes it possible to increase the size of the fluid discharge section considerably, the initial extension of the rupture portion remaining equal.

In fact, the configuration of the weakening lines allows for making the petal more bendable and generally flexible and in any case, the weakening lines make it possible to prevent detachment of or damage to the petal.

## Claims

1. A safety or rupture element (1) for a pipeline containing a fluid, shaped so as to be arranged along said pipeline, transversely thereto, and having a rupture portion (2) dimensioned so as to occlude said pipeline and wherein frangible lines (2') are defined and in turn define a plurality of petals (2"), said petals (2") converging towards said central axis (H) and being arranged adjacent to each other and about said central axis (H), in a closed configuration of said safety element (1),
wherein said frangible lines (2') are dimensioned so as to split open, in a discharge configuration of said element (1), and each of said petals (2") is suitable for opening by turning about at least one reversal axis (R) so as to define a discharge section for passage of said fluid coming from said pipeline,
**characterized in that** said petals (2") exhibit at least one weakening line (3) lying in proximity to said at least one reversal axis (R) and at least partially oriented transversely to said reversal axis (R), wherein said at least one weakening line (3) intersects said at least one reversal axis (R) in proximity to a median line of said reversal axis (R) and exhibits a substantially radial extension.

2. The safety element according to one or more of the preceding claims, wherein said at least one petal (2") is delimited laterally by at least two frangible lines (2'), each of which, in a closed configuration of said element (1), extends from a common point of intersection (O) to an end portion, said at least one reversal axis (R) joining the two respective end portions of said at least two frangible lines (2') and corresponding at least partly to a base of said at least one petal (2").

3. The safety element according to one or more of the preceding claims, wherein said at least one weakening line (3) is arranged astride said at least one reversal axis (R) and exhibits a substantially radial extension.

4. The safety element according to one or more of the preceding claims, comprising, for each petal, a plurality of weakening lines (3) arranged astride said reversal axis (R) and that are equidistant from each other.

5. The safety element according to one or more of the preceding claims, wherein said rupture portion (2) is separated from a peripheral portion (5) of said rupture element (1) by an outline (4), and wherein said at least one weakening line (3) intersects said outline (4), said at least one line of weakening (3) preferably extending astride said outline (4).

6. The safety element according to one or more of the preceding claims, wherein said at least one petal (2") exhibits a number of weakening lines (3) distributed along said at least one reversal axis (R).

7. The safety element according to one or more of the preceding claims, wherein said rupture portion (2) defines a central axis (H) suitable for being arranged parallel to said pipeline and said at least one weakening line (3) is at least partially oriented radially with respect to said central axis (H), in a closed configuration of said safety element (1).

8. The safety element according to claim 10, **characterized in that** said petals (2") are angularly distributed so that the respective reversal axes (R) define a polygon inscribed in circle, said safety element comprising a plurality of weakening lines (3) that are associated with each petal (2") and equispaced angularly with respect to each other.

9. The safety element according to one or more of the preceding claims, wherein, in a closed configuration of said safety element (1), said rupture portion (2) is concave and preferably dome-shaped.

10. The safety element according to one or more of the preceding claims, wherein said at least one weakening line (3) is shallower in depth than said one or more frangible lines (2').

11. The safety element according to one or more of the preceding claims, wherein said one or more frangible lines (2') and said at least one weakening line (3) are realized by means of laser cutting

12. A method for making a safety element, said element (1) being in accordance with one or more of the preceding claims, comprising the realization of said one or more frangible lines (2') and said at least one weakening line (3) by means of laser cutting.

## Patentansprüche

1. Sicherheits- oder Bruchelement (1) für eine ein Betriebsmedium enthaltende Rohrleitung, die durch ihre Form entlang und quer zu der genannten Rohrleitung angeordnet werden kann und einen zum Verschließen der genannten Rohrleitung dimensionierten Bruchbereich (2) aufweist und bei dem Bruchlinien (2') definiert sind, die wiederum eine Vielzahl von Abschnitten (2") definieren, wobei die genannten Abschnitte (2") mit der genannten Mittelachse (H) zusammenlaufen und aneinander angrenzend und über der genannten Mittelachse (H) in einer geschlossenen Konfiguration des genannten Sicherheitselements (1) angeordnet sind,
bei dem die genannten Bruchlinien (2') so dimensioniert sind, dass sie in einer Entlastungskonfiguration des genannten Elements (1) aufbrechen und jeder der genannten Abschnitte (2") geeignet ist, sich durch Drehung um mindestens eine Kehrachse (R) zu öffnen, um einen Entlastungsabschnitt für den Durchgang des aus der genannten Rohrleitung kommenden genannten Betriebsmediums zu definieren,
**dadurch gekennzeichnet, dass** die genannten Abschnitte mindestens eine Schwächungslinie (3) in der Nähe der genannten mindestens einen Kehrachse (R) aufweisen und mindestens partiell quer zu der genannten Kehrachse (R) ausgerichtet sind, wobei die genannte mindestens eine Schwächungslinie (3) die genannte mindestens eine Kehrachse (R) in der Nähe einer Mittellinie der genannten Kehrachse (R) schneidet und einen im Wesentlichen radialen Verlauf zeigt.

2. Sicherheitselement nach einem oder mehreren der vorangegangenen Ansprüche, bei dem der genannte mindestens eine Abschnitt (2") seitlich von mindestens zwei Bruchlinien (2') begrenzt wird, von denen jede in einer geschlossenen Konfiguration des genannten Elements (1) von einem gemeinsamen Schnittpunkt (0) zu einem Endabschnitt verläuft, wobei die genannte mindestens eine Kehrachse (R) die beiden jeweiligen Endabschnitte der genannten mindestens zwei Bruchlinien (2') verbindet und mindestens partiell der Basis des genannten mindestens einen Abschnitts (2") entspricht.

3. Sicherheitselement nach einem oder mehreren der vorangegangenen Ansprüche, bei dem die genannte mindestens eine Schwächungslinie (3) die genannte mindestens eine Kehrachse (R) überbrückend angeordnet ist und im Wesentlichen einen radialen Verlauf zeigt.

4. Sicherheitselement nach einem oder mehreren der vorangegangenen Ansprüche, umfassend für jeden Abschnitt eine Vielzahl von die genannte Kehrachse (R) überbrückend angeordneten Schwächungslinien (3), die sich im gleichen Abstand zueinander befinden.

5. Sicherheitselement nach einem oder mehreren der vorangegangenen Ansprüche, bei dem der genannte Bruchbereich (2) von einem umlaufenden Bereich (5) des genannten Bruchelements (1) durch eine Außenlinie (4) getrennt ist und bei dem die genannte mindestens eine Schwächungslinie (3) die genannte Außenlinie (4) schneidet, wobei die genannte mindestens eine Schwächungslinie (3) vorzugsweise die genannte Außenlinie (4) überbrückend verläuft.

6. Sicherheitselement nach einem oder mehreren der vorangegangenen Abschnitte, bei dem der genannte mindestens eine Abschnitt (2") eine Reihe von entlang der genannten mindestens einen Kehrachse (R) verteilte Schwächungslinien (3) zeigt.

7. Sicherheitselement nach einem oder mehreren der vorangegangenen Ansprüche, bei dem der genannten Bruchbereich (2) eine Mittelachse (H) definiert, die geeignet ist, parallel zu der genannten Rohrleitung angeordnet zu werden, und bei dem die genannte mindestens eine Schwächungslinie (3) mindestens partiell in einer geschlossenen Konfiguration des genannten Sicherheitselements (1) radial im Verhältnis zu der genannten Mittelachse (H) angeordnet ist.

8. Sicherheitselement nach Anspruch 10, **dadurch gekennzeichnet, dass** die genannten Abschnitte (2") winklig so verteilt sind, dass die jeweiligen Kehrachsen (R) ein in einen Kreis eingeschriebenes Polygon definieren, wobei das genannte Sicherheitselement eine Vielzahl von Schwächungslinien (3) umfasst, die mit jedem Abschnitt (2") verbunden sind und sich winklig im gleichen Abstand zueinander befinden.

9. Sicherheitselement nach einem oder mehreren der vorangegangenen Ansprüche, bei dem in einer geschlossenen Konfiguration des genannten Sicherheitselements (1) der genannten Bruchbereich (2) konkav und vorzugsweise kuppelförmig ist.

10. Sicherheitselement nach einem oder mehreren der vorangegangenen Ansprüche, bei dem die genannte mindestens eine Schwächungslinie (3) eine flachere Tiefe als die genannten eine oder mehreren Bruchlinien (2') aufweist.

11. Sicherheitselement nach einem oder mehreren der vorangegangenen Ansprüche, bei dem die genannten eine oder mehrere Bruchlinien (2') und die genannten eine oder mehrere Schwächungslinien (3) mittels Laserstrahlschneiden realisiert werden.

12. Verfahren zur Herstellung eines Sicherheitselements, wobei das genannte Element (1) einem oder mehreren der vorangegangenen Ansprüche entspricht, das die Herstellung der genannten einen oder mehreren Bruchlinien (2') und der genannten mindestens einen Schwächungslinie (3) mittels Laserstrahlschneiden umfasst.

## Revendications

1. Élément de sécurité ou de rupture (1) pour une conduite contenant un fluide, conçu pour être agencé le long de la conduite, transversalement à celle-ci, et comprenant une partie de rupture (2) ayant une dimension telle qu'elle peut fermer ladite conduite et dans laquelle des lignes frangibles (2') sont définies et définissent à leur tour, une pluralité de pétales (2"), lesdits pétales (2") convergeant vers ledit axe central (H) et étant agencés de manière adjacente les uns des autres et autour dudit axe central (H), dans une configuration fermée dudit élément de sécurité (1),
dans lequel lesdites lignes frangibles (2') sont conçues de manière à se fendre, dans une configuration de décharge dudit élément (1), chacun desdits pétales (2') pouvant s'ouvrir par rotation autour d'au moins un axe d'inversion (R) de manière à définir une section de décharge pour le passage dudit fluide venant de ladite conduite,
**caractérisé en ce que** lesdits pétales (2") présentent au moins une ligne de faiblesse (3) située à proximité dudit au moins un axe d'inversion (R) et au moins partiellement orientée transversalement par rapport audit axe d'inversion (R), dans lequel l'au moins une ligne de faiblesse (3) coupe ledit au moins un axe d'inversion (R) à proximité d'une ligne médiane dudit axe d'inversion (R) et présente une extension sensiblement radiale.

2. Élément de sécurité selon l'une ou plusieurs des revendications précédentes, dans lequel l'au moins un pétale (2") est délimité latéralement par au moins deux lignes frangibles (2'), chacune, en configuration fermée dudit élément (1), s'étendant depuis un point commun d'intersection (O) vers une partie terminale, ledit au moins un axe d'inversion (R) joignant les deux parties terminales respectives desdites au moins deux lignes frangibles (2') et correspondant au moins partiellement à la base dudit au moins un pétale (2").

3. Élément de sécurité selon l'une ou plusieurs des revendications précédentes, dans lequel ladite au moins une ligne de faiblesse (3) est agencée à cheval sur ledit au moins un axe d'inversion (R) et présente une extension sensiblement radiale.

4. Élément de sécurité selon l'une ou plusieurs des revendications précédentes, comprenant pour chaque pétale, une pluralité de lignes de faiblesse (3) agencées à cheval sur ledit axe d'inversion (R) et équidistantes les unes des autres.

5. Élément de sécurité selon l'une ou plusieurs des revendications précédentes, dans lequel ladite partie de rupture (2) est séparée d'une partie périphérique (5) dudit élément de rupture (1) par un contour (4) et dans lequel ladite au moins une ligne de faiblesse (3) coupe ledit contour (4), ladite au moins une ligne de faiblesse (3) s'étendant de préférence à cheval sur ledit contour (4).

6. Élément de sécurité selon l'une ou plusieurs des revendications précédentes, dans lequel ledit au moins un pétale (2") présente un certain nombre de lignes de faiblesse (3) distribuées le long dudit au moins un axe d'inversion (R).

7. Élément de sécurité selon l'une ou plusieurs des revendications précédentes, dans lequel ladite partie de rupture (2) définit un axe central (H) apte à être disposé parallèlement à ladite conduite et ladite au moins une ligne de faiblesse (3) est au moins partiellement orientée radialement par rapport audit axe central (H), en configuration fermée dudit élément de sécurité (1).

8. Élément de sécurité selon la revendication 10, **caractérisé en ce que** lesdits pétales (2") sont distribués de manière angulaire de sorte que les axes d'inversion (R) respectifs définissent un polygone inscrit dans un cercle, ledit élément de sécurité comprenant une pluralité de lignes de faiblesse (3), qui sont associées à chaque pétale (2") et espacées de manière angulaire les uns par rapport aux autres.

9. Élément de sécurité selon l'une ou plusieurs des revendications précédentes, dans lequel, en configuration fermée dudit élément de sécurité (1), ladite partie de rupture (2) est concave et de préférence, en forme de dôme.

10. Élément de sécurité selon l'une ou plusieurs des revendications précédentes, dans lequel ladite au moins une ligne de faiblesse (3) est moins profonde que ladite une ou les plusieurs lignes frangibles (2').

11. Élément de sécurité selon l'une ou plusieurs des revendications précédentes, dans lequel ladite une ou les plusieurs lignes frangibles (2') et ladite au moins une ligne de faiblesse (3) sont réalisées au moyen d'une découpe par laser.

12. Procédé de fabrication d'un élément de sécurité, ledit élément (1) étant conforme à l'une ou plusieurs des revendications précédentes, comprenant la réalisation de ladite une ou plusieurs lignes frangibles (2') et de ladite au moins une ligne de faiblesse (3) au moyen d'une découpe par laser.
